# EUROPÄISCHE PATENTSCHRIFT

(11) **EP 0 740 901 B1**
(45) Veröffentlichungstag und Bekanntmachung des Hinweises auf die Patenterteilung: **03.03.1999**
(21) Anmeldenummer: 96106351.8
(22) Anmeldetag: 23.04.1996
(51) Int. Cl.: A01N 25/02

(54) **Neue Flüssigformulierungen**
New liquid formulations
Formulations liquides nouvelles

(30) Priorität: 05.05.1995 DE 19516522
(43) Veröffentlichungstag der Anmeldung: 06.11.1996
(73) Patentinhaber: BAYER AG, 51368 Leverkusen (DE)
(72) Erfinder: Sirinyan, Kirkor, Dr., 51467 Bergisch Gladbach (DE); Sonneck, Rainer, Dr., 51375 Leverkusen (DE); Mrusek, Klaus, 51467 Bergisch Gladbach (DE)

(56) Entgegenhaltungen:
- EP-A- 0 648 414
- DE-A- 3 027 767
- DE-A- 4 140 928
- US-A- 5 160 528

## Beschreibung

Die vorliegende Erfindung betrifft neue, in Wasser emulgierbare Flüssigformulierungen insektizider Wirkstoffe.

Bei der Anwendung zum Teil schwer wasserlöslicher insektizider Wirkstoffe in Form von wasserverdünnten Spritzmitteln ist es notwendig, mit Wasser emulgierbare Formulierungen für diese Wirkstoffe herzustellen. Dazu werden die Wirkstoffe zumeist in organischen Lösungsmitteln gelöst und mit Emulgatoren und gegebenenfalls weiteren Zusatzstoffen vermischt. Die Herstellung solcher Formulierungen ist z.B. in DE-OS 3 027 767 beschrieben. Als Lösungsmittel werden dabei u.a. Dimethylformamid und Dimethylacetamid verwendet. Es ist wünschenswert diese Lösungsmittel durch solche zu ersetzen, die gut verträglich und toxikologisch unbedenklich sind.

Die vorliegende Erfindung betrifft
1. Wasser-emulgierbare Flüssigformulierungen von insektiziden Wirkstoffen, dadurch gekennzeichnet, daß sie
   a) 2,5 bis 30 % Wirkstoff,
   b) 5 bis 77,5 % einer Mischung aus Benzylacetat und einem Alkohol im Verhältnis 25-95 % zu 5-75 %,
   c) 2,5 bis 20 % Formulierungshilfsmittel
   enthalten.
   (Die %-Angaben sind Gewichtsprozent.)

Die erfindungsgemäßen Formulierungen eignen sich hervorragend zur Herstellung von Spritzbrühen für den professionellen Einsatz bei der Schädlingsbekämpfung in Haushalt, Gewerbe, Stallungen etc. Sie zeichnen sich durch hervorragende Lagerstabilität sowie sehr gute Emulgierbarkeit in Wasser aus. Sie sind außerdem preiswert herzustellen. Die ausgewählten Lösungsmittel sind unproblematisch für den Anwender.

Als Wirkstoffe seien bevorzugt genannt die im Hygiene- und professionellen Schädlingsbekämpfungsbereich eingesetzten Insektizide wie Carbamate, Pyrethroide, Phosphorsäureester, sowie Mischungen dieser Wirkstoffe mit Synergisten.

Als Carbamate seien genannt substituierte Phenyl- und Naphthylcarbamate.

Bevorzugt seien genannt:
- 2-Isobutylphenyl-N-methylcarbamat,
- 4-Dimethylamino-3-methylphenyl-N-methylcarbamat,
- 2-Isopropoxy-phenyl-N-methylcarbamat,
- 1-Naphthyl-N-methylcarbamat,
- m-Tolyl-N-methylcarbamat,
- 3,4-Xylyl-N-methylcarbamat,
- 3,5-Xylyl-N-methylcarbamat,
- 2-[1,3-Dioxolan-2-yl]-phenyl-N-methylcarbamat.

Als Pyrethroide seien bevorzugt genannt die Verbindungen mit den common names Permethrin, Cypermethrin, Deltamethrin, Cyfluthrin.

Als Phosphorsäureester seien bevorzugt genannt die Verbindungen mit den common names Fenitrothion, Dichlorvos, Trichlorfon.

Als Synergist für diese Verbindungen sei bevorzugt genannt Piperonylbutoxid.

Die Wirkstoffe liegen zu 2,5 bis 30 Gew.-%, bevorzugt 5 bis 25 %, ganz besonders bevorzugt 15 bis 20 %, vor.

Als erfindungsgemäßes Lösungsmittel wird ein Gemisch aus Benzylacetat und einem Alkohol eingesetzt. Als Alkohole seien bevorzugt genannt aliphatische C₁₋₈-Alkohole, die gegebenenfalls substituiert sind, ferner Benzylalkohol oder Tetrahydrofurfurylalkohol.

Besonders bevorzugt seien genannt Ethanol, Isopropanol, n-Butanol sowie Benzylalkohol.

In den erfindungsgemäßen Formulierung liegt die Lösungsmittelmasse zu 5 bis 77,5 Gew.-%, bevorzugt 25 bis 75 %, ganz besonders bevorzugt 50-75 % vor.

In der erfindungsgemäßen Formulierung liegt Benzylacetat (bezogen auf die gesamte Lösungmittelmasse) zu 25 bis 95 Gew.-%, bevorzugt 20 bis 70 %, besonders bevorzugt 25 bis 50 %, vor.

Die Alkohole (bezogen auf die gesamte Lösungsmittelmasse) liegen zu 5 bis 75 Gew.-%, bevorzugt 50 bis 75 %, besonders bevorzugt 30 bis 50 %, vor.

Zusätzlich können die erfindungsgemäßen Formulierungen übliche Hilfsmittel wie Emulgatoren, Stabilisatoren, Antioxidantien oder Geruchsmaskierungsmittel enthalten.

Als Emulgatoren seien genannt: nichtionogene Tenside, z.B. polyoxyethyliertes Rizinusöl, polyoxyethyliertes Sorbitan-monooleat, Sorbitanmonostearat, Glycerinmonostearat, Polyoxyethylstearat, Alkylphenylpolyglykolether;
ampholytische Tenside wie Di-Na-N-lauryl-ß-iminodipropionat oder Lecithin;
anionaktive Tenside, wie Na-Laurylsulfat, Fettalkoholethersulfate, Mono/Dialkylpolyglykoletherorthophosphor-säureester-monoethanolaminsalz; kationaktive Tenside wie Cetyltrimethylammoniumchlorid.

Als Stabilisatoren und Antioxidantien seien genannt Sulfite oder Metabisulfite wie Kaliummetabisulfit; organische Säuren wie Citronensäure; Ascorbinsäure; Phenole, Butylhydroxytoluol, Butylhydroxyanisol, Tocopherol.

Emulgatoren sind in den erfindungsgemäßen Formulierungen zu 2,5 bis 17,5 Gew.-%, besonders bevorzugt 5 bis 15 % enthalten.

Stabilisatoren und Antioxidantien sind bevorzugt zu 0,1 bis 0,5 Gew.-%, besonders bevorzugt zu 0,1 bis 0,25 % enthalten.

Geruchsmaskierungsmittel sind z.B. Mischungen organischer Fettsäureester. Sie sind bevorzugt zu 0,1 bis 2 Gew.-% in den erfindungsgemäßen Formulierungen enthalten.

Die nachfolgenden Beispiele sollen die Erfindung erläutern:

### Beispiel 1

| | |
|---|---|
| Propoxur [Cas. Nr. 114-26-1] | 20 g |
| Emulgator PS 16⁽¹⁾ | 12 g |
| Emulgator 1371 A⁽²⁾ | 2 g |
| Tetrahydrofurfurylalkohol | 7,5 g |
| Benzylacetat | 61,78 g (ad 100 ml) |
| Citronensäure | 0,1 g |
| BHT (Butylhydroxytoluol) | 0,1 g |

| | |
|---|---|
| ⁽¹⁾ Emulgator PS 16 ist ein Alkylarylpolyglykolether der Fa. Bayer AG. | |
| ⁽²⁾ Emulgator 1371 A ist ein Alkylarylsulfonat (67 %ig in n-Butanol der Fa. Bayer AG). | |

### Beispiel 2

| | |
|---|---|
| Propoxur | 11 g |
| Benzylacetat 60 %, Benzylalkohol 40 % | 77,9 g (ad. 100 ml) |
| Emulgator 1371 A | 5 g |
| Emulsogen EL⁽³⁾ | 8 g |
| Citronensäure | 0,1 g |
| BHT | 0,1 g |

| | |
|---|---|
| ⁽³⁾ Emulsogen El ist ein ethoxyliertes Pflanzenöl der Fa. Hoechst AG | |

### Beispiel 3

| | |
|---|---|
| Propoxur | 20 g |
| Emulsogen EL | 8 g |
| Emulgator 1371 A | 5 g |
| Citronensäure | 0,1 g |
| BHT | 0,1 g |
| Malodur Courteract⁽⁴⁾ | 2,0 g |
| Benzylacetat 35 %, Benzylalkohol | 65 % 69,1 g (ad. 100 ml) |

| | |
|---|---|
| ⁽⁴⁾ Malodur Couteract ist ein Geruchsmaskierungsmittel auf Fettsäureesterbasis der Fa. Haarmann und Reimer. | |

### Prüfung auf biologische Residualwirkung

### Versuchsmethode

Um die Wirkung der in Beispiel 3 angegebenen Formulierung zu ermitteln, wurden Spritzbrühen hergestellt. Mit diesen Spritzbrühen wurden verschiedene Unterlagen PVC-Fußbodenbelag, lackiertes Sperrholz, lasierte und unlasierte Kacheln in bestimmten Aufwandmengen (mg a.i./m²) besprüht.

Eine Woche nach Behandlung bis zu 4 Wochen wöchentlich, ann weiter nach 6, 8 und 12 Wochen wurden 5 Schaben auf die jeweiligen Unterlagen gesetzt. Die Tiere wurden mittels eines talkumiertem Glasring (Durchmesser; 9,5 cm; 5,5 cm) auf den behandelten Flächen gehalten und verblieben dort für 24 Stunden.

Die Auswertung auf prozentuale Abtötung erfolgte vom Zeitpunkt des Ansetzens aus gerechnet nach 15 Minuten und 30 Minuten, sowie nach einer bis zu 6 Stunden stündlich. Weitere Auswertungen erfolgten nach 8 und 24 Stunden (vgl. Tab. 1)

Wie Tab. 1 zu entnehmen ist, weisen die Spritzbrühen auf Basis der erfindungsgemäßen Flüssigformulierung auf verschiedenen Unterlagen eine hervorragende biologische Wirkung auf.

Die Lagerstabilität der in Beispielen 1-3 angegebenen Flüssigformulierungen bzw. deren Spritzbrühen ist hervorragend.

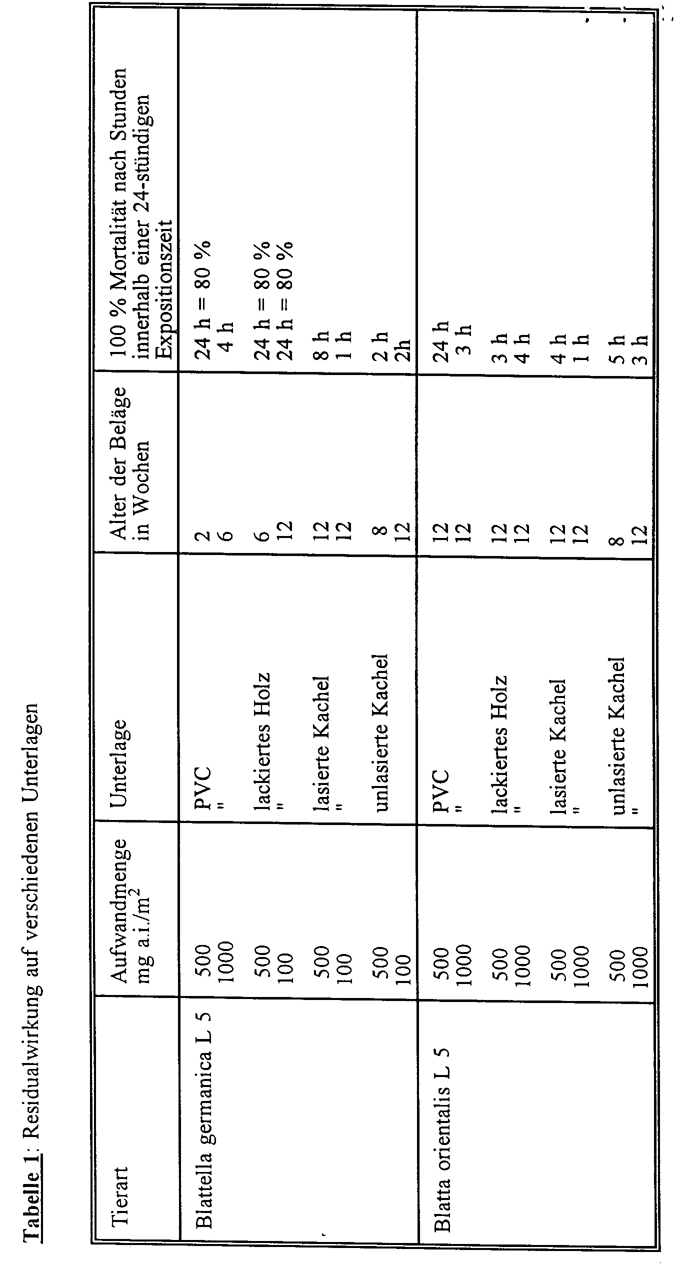

## Patentansprüche

1. Wasser-emulgierbare Flüssigformulierungen von insektiziden Wirkstoffen, dadurch gekennzeichnet, daß sie
a) 2,5 bis 30 % Wirkstoff,
b) 5 bis 77,5 % einer Mischung aus Benzylacetat und einem Alkohol im Verhältnis 25-95 % zu 5-75 %,
c) 2,5 bis 20 % Formulierungshilfsmittel
enthalten.

2. Wasser-emulgierbare Flüssigformulierungen nach Anspruch 1, dadurch gekennzeichnet, daß sie als insektizide Wirkstoffe Carbamate enthalten.

3. Wasser-emulgierbare Flüssigformulierungen nach Anspruch 1-2, dadurch gekennzeichnet, daß sie als Formulierungshilfsmittel Stabilisatoren und Antioxidantien zu 0,1 bis 0,5 Gew.-% enthalten.

4. Wasser-emulgierbare Flüssigformulierungen nach Anspruch 3, dadurch gekennzeichnet, daß sie Stabilisatoren auf Basis von organische Säuren enthalten.

5. Wasser-emulgierbare Flüssigformulierungen nach Anspruch 3, dadurch gekennzeichnet, daß sie Antioxidantien auf Basis von Phenolen enthalten.

## Claims

1. Water-emulsifiable liquid formulations of insecticidal active compounds, characterized in that they contain
a) 2.5 to 30 % of active compound,
b) 5 to 77.5 % of a mixture of benzyl acetate and an alcohol in the ratio 25-95 % to 5-75 %,
c) 2.5 to 20 % of formulation auxiliary.

2. Water-emulsifiable liquid formulations according to Claim 1, characterized in that they contain carbamates as insecticidal compounds.

3. Water-emulsifiable liquid formulations according to Claim 1-2, characterized in that, as formulation auxiliaries, they contain stabilizers and antioxidants to 0.1 to 0.5% by weight.

4. Water-emulsifiable liquid formulations according to Claim 3, characterized in that they contain stabilizers based on organic acids.

5. Water-emulsifiable liquid formulations according to Claim 3, characterized in that they contain antioxidants based on phenols.

## Revendications

1. Formulations liquides, émulsionnables dans l'eau, d'agents actifs insecticides, caractérisées en ce qu'elles contiennent :
a) 2,5 à 30% d'agent actif ;
b) 5 à 77,5% d'un mélange d'acétate de benzyle et d'un alcool en un rapport de 25-95% à 5-75%, et
c) 2,5 à 20% d'adjuvant de formulation.

2. Formulations liquides émulsionnables dans l'eau suivant la revendication 1, caractérisées en ce qu'elles contiennent un carbamate comme agent actif insecticide.

3. Formulations liquides émulsionnables dans l'eau suivant la revendication 1-2, caractérisées en ce qu'elles contiennent des stabilisants et des antioxydants depuis 0,1 à 0,5% en poids, comme adjuvants de formulation.

4. Formulations liquides émulsionnables dans l'eau suivant la revendication 3, caractérisées en ce qu'elles contiennent des stabilisants à base d'acides organiques.

5. Formulations liquides émulsionnables dans l'eau suivant la revendication 3, caractérisées en ce qu'elles contiennent des antioxydants à base de phénols.
